# EUROPÄISCHE PATENTSCHRIFT

(11) **EP 0 306 932 B1**
(45) Veröffentlichungstag und Bekanntmachung des Hinweises auf die Patenterteilung: **29.06.1994**
(21) Anmeldenummer: 88114639.3
(22) Anmeldetag: 08.09.1988
(51) Int. Cl.: B41N 1/12

(54) **Druckform für das Hochdruckverfahren**
Printing form for the relief printing process
Plaque d'impression pour le procédé d'impression en relief

(30) Priorität: 09.09.1987 DE 3730193
(43) Veröffentlichungstag der Anmeldung: 15.03.1989
(73) Patentinhaber: BONNER ZEITUNGSDRUCKEREI UND VERLAGSANSTALT H. NEUSSER GmbH & CO. KG, D-53121 Bonn (DE)
(72) Erfinder: Güls, Dieter, D-5300 Bonn 1 (DE)
(74) Vertreter: Eggert, Hans-Gunther, Dr.

(56) Entgegenhaltungen:
- EP-A- 0 079 590
- EP-A- 0 115 414
- DD-A- 83 168
- DE-A- 1 796 198
- DE-A- 2 721 417
- FR-A- 1 322 443
- FR-A- 1 465 951
- FR-A- 2 210 935
- GB-A- 2 066 159
- US-A- 3 901 700
- US-A- 4 297 263
- US-A- 4 551 516
- DERWENT JAPANESE PATENTS REPORT. vol. U, no. 52, 29 Januar 1974, LONDON GB Seite G.7; JP-B-7343285
- DERWENT JAPANESE PATENTS REPORT. vol. U, no. 48, 31 Dezember 1973, LONDON GB Seite G.2; JP-B-73 39243
- CHEMICAL AND ENGINEERING NEWS. no. 34, 21 August 1972, COLUMBUS US Seite 16 An.: "Polypropylene printing plates replace metal"
- CHEMICAL ABSTRACTS, vol. 83, no. 12, 22 September 1975 Columbus, Ohio, USA; JP-A-75 21805
- JAPANESE PATENTS REPORT, SECTION CH: CHEMICAL. no. X21, 30 Juni 1976, LONDON GB Seite G.2; JP-51 40206
- Encyclopedie of Polymer Science and Engineering, Band 14, Seite 416
- Ullmanns Encyklopädie der Technischen Chemie, 4. Aufl., Band 10, Seite 197
- Ullmanns Encyklopädie der Technischen Chemie, 4. Aufl., Band 24, Seite 69
- Kirk-Othmer: Encyclopedia of Chemical Technology, 3. Aufl., Band 20, Seite 967

## Beschreibung

Die Erfindung betrifft eine Druckform, insbesondere Druckplatten, mit druckenden Stellen aus Kunststoff.

Hochdruckplatten aus Kunststoff sind bereits bekannt. So kennt man aus der FR-A-1 322 443 eine Hochdruckplatte, deren farbführenden, druckenden Stellen aus einem Organo-Polysiloxan-Elastomeren bestehen, das durch Vulkanisation einer Siliconverbindung bei Raumtemperatur hergestellt ist.

Aus der US-A-4,297,263, der DE-A-1 796 198, der JP-A-73 43 285, der JP-A-73 39 243, der JP-A-75 21 805 sowie aus Chemical and Engineering News, Nr. 34, August 21, 1972, S. 16, sind auch Hochdruckplatten aus Polyethylen oder Polypropylen bzw. Mischungen aus Polyethylen und Polypropylen bekannt, wobei deren Herstellung nach bekannten Methoden wie Gravieren oder Pressen unter Druck bei erhöhten Temperaturen unter Verwendung von entsprechend geformten Matrizen usw. erfolgt.

Beim Drucken, d.h. Vervielfältigen von Informationen, sei es in Form von Rasterpunkten, Schriftzeichen oder auch Vollflächen sowohl in schwarz/weiß, in Spotfarben oder auch im Mehrfarbendruck, ist man bestrebt, eine möglichst hohe Qualität der Wiedergabe bei vertretbarem Aufwand zu erzielen. Allgemeine verfahrensunabhängige drucktechnische Qualitätskriterien sind dabei die Konturenschärfe der Zeichnungselemente, die Gleichmäßigkeit und die Densität der Rasterpunkte bzw. Schriftzeichen sowie bei Flächendruck im Raster die Gleichmäßigkeit der Rasterflächen und das Offenhalten der Rasterzwischenräume bzw. bei Flächendruck das gleichmäßige Ausdrucken bei Vollton. Bei Mehrfarbendruck ist darüberhinaus die Toleranz der Farbregister von Bedeutung sowie in allen Fällen die Gleichmäßigkeit der Farbführung über die Druckfläche wie auch über die Zeit.

Die Höhe der Druckqualität im Zeitungsdruck wird wesentlich von den Anforderungen des Marktes, den Lesergewohnheiten, den Ansprüchen der Anzeigenkunden, der Konkurrenzsituation und von den technischen Möglichkeiten unter Beachtung wirtschaftlicher Überlegungen bestimmt. Dabei erreicht man im allgemeinen mit dem Offset-Verfahren das höhere Qualitätsniveau, wenngleich durch die Weiterentwicklung der Materialien sowie den Einsatz fotopolymerer Druckplatten auch im Zeitungshochdruck Fortschritte zu verzeichnen sind.

Um durchschnittliche Offset-Qualität zu erreichen, bedarf es beim Hochdruckverfahren jedoch besonderer und verhältnismäßig aufwendiger Anstrengungen.

Beim Hochdruckverfahren in seinen derzeitigen Ausführungsformen kommen mineral- und pflanzenölhaltige Farben unterschiedlicher Viskosität und Konsistenz zur Anwendung, deren Eigenschaften letzlich vom Bedruckstoff sowie vom Deckungserfordernis, dem Weg- und Durchschlagverhalten, der Trockungseigenschaft und der Wischfestigkeit bestimmt werden.

Um die jeweils erforderliche Menge Farbe auf die Druckform und von dieser dann auf den Bedruckstoff zu bringen, finden die unterschiedlichsten Farbwerke vom einfachen Heberfarbwerk über Filmfarbwerke bis hin zum modernen Aniloxfarbwerk Verwendung, denen die Aufgabe der Farbverreibung, der Farbmengensteuerung und der Einfärbung der Druckplatten zukommt. Damit sind aber Unterschiede geschaffen, die von ihrer technischen Konzeption her sehr unterschiedliche Farbvarianten erforderlich machen. Die erforderliche wiedergabebezogene Farbmenge ist nur in seitenbelegter Druckrichtung meßbar, wobei die flächenmäßige Intervallfolge nicht steuerbar ist, woraus folgt, daß die Sättigung der Druckform mit Farbe bei hoher Dichte zwangsläufig in der Intervallfolge der Druckrichtung zu einer Übersättigung in den Partien mit lichteren Elementen führt.

Der Druckvorgang vollzieht sich beim Zeitungshochdruck durch Gegeneinanderlaufen der Druck- und Plattenzylinder, wobei man im Überzugsbereich des Druckzylinders in der Praxis die unterschiedlichsten Härteverhältnisse sowie bei den Aufspanneinrichtungen für die Druckplatten sowohl Magnet- wie auch Spannbefestigungen vorfindet. Der zwischen Druck- und Plattenzylinder vorhandene Anpreßdruck wirkt linear über die gesamte Zylinderbreite und kann nur rechts- und linksseitig linear gesteuert werden.

Da bei einer Hochdruckplatte alle druckenden Elemente in einer Ebene liegen, treffen die dynamischen Druckverhältnisse gleichermaßen stark auf Druckflächen und lichte Teile einer Druckplatte. Dies macht ein Zurichten der Druckplatten erforderlich, es müssen z.B. Partien mit Negativelementen grundsätzlich unterlegt werden, um den nötigen Anpreßdruck für eine einigermaßen vertretbare Deckung auf dem Bedruckstoff partiell zu erzielen.

Alle diese zusätzlich erforderlichen Maßnahmen sind verhältnismäßig zeitaufwendig und bringen letztlich nur im begrenzten Umfang Abhilfe. Das Halten der Lichter, das Offenhalten der Punkte im Tiefenbereich sowie eine originalgetreue Wiedergabe von Strichelementen sind, selbst wenn diese in der Druckplatte abgedeckt werden, praktisch nicht zu erreichen.

Ziel der vorliegenden Erfindung ist es insbesondere, die Hochdruckqualität durch Erweiterung der Wiedergabemöglichkeiten des bestehenden Rasterbereichs sowohl im Licht- als auch im Tiefenbereich durch Reduzierung des Druckzunahmebereichs, durch geschlossene Deckung bei Negativflächen sowie durch den Versuch der originalgetreuen Wiedergabemöglichkeiten aller Zeichnungselemente der Druckform zu optimieren. Dementsprechend macht es sich die Erfindung zur Aufgabe, einen in Bezug auf die Wiedergabeerfordernisse mengenmäßig genau gesteuerten Transport von Druckfarbe aus einem Farbvorratsvolumen über einen vorherbestimmten Transportweg unter Erzielung der erforderlichen Deckung auf einen Bedruckstoff zu bewerkstelligen.

Beim herkömmlichen Zeitungsrotations-Hochdruckverfahren, nämlich Transport der Druckfarbe mittels eines Farbwerkes zu einem Druckträger, Einfärben der Hochdruckform und Abgabe der Druckfarbe von der Druckplatte auf einen Bedruckstoff unter gleichzeitiger Einwirkung eines von einem Druckzylinder ausgeübten Gegendruckes wird die Druckfarbe im Überschuß gefördert bzw. transportiert, um auf den Bedruckstoff das erforderliche Farbdeckungsvolumen aufzubringen. Der durch den zwischen dem Druckträger und dem Druckzylinder wirkenden Preßdruck gegebene Quetscheffekt hat dabei zur Folge, daß ein Teil der Druckfarbe an die Flanken der raster- oder auch schriftzeichenförmigen Druckflächen und dabei auch in die zwischen den Druckflächen befindlichen Tiefen gedrückt wird und diese dabei mehr oder weniger zusetzt, mit der Folge, daß eine Unschärfe der Rasterpunkte bzw. Schriftzeichen und gleichzeitig eine Aufspaltung der Druckfarbe auftritt.

Es wurde nun überraschend gefunden, daß mit einer Druckform gemäß Anspruch 1 die erfindungsgemäße Aufgabe gelöst wird. Zweckmäßige Ausgestaltungen der Erfindung sind in den Unteransprüchen beschrieben.

Durch die erfindungsgemäße Ausbildung der Druckform wird in vorteilhafter Weise erreicht, daß die Farbmengenförderung auf das zur Erzielung einer einwandfreien Farbdeckung auf dem Bedruckstoff tatsächlich erforderliche Volumen beschränkt wird, wodurch eine Übersättigung mit Farbe auf der Druckform vermieden wird. Dadurch wird auch eine Quetschung der Farbe zwischen Druckform und Druckzylinder in entsprechendem Maße herabgesetzt, so daß es nicht mehr zu einem Verguetschen über die Rasterkanten hinaus im Bereich der Raster, Schriftzeichen oder dergleichen und somit nicht mehr zum Zusetzen der Tiefen kommt, vielmehr werden die Lichter randscharf wiedergegeben, weil die speziellen Eigenschaften der Druckform die Farbe ausschließlich an den beim Einfärbevorgang der Auftragswalze gegenüberliegenden Bereichen haften lassen. Entsprechend dem auf das erforderliche Maß verringerten Aufnahmevolumen an Farbe bildet sich ein entsprechend verhältnismäßig dünner Farbfilm aus, dessen Abnahme von der Druckform bei geringem Anpreßdruck erfolgt. Die aufgetragene Farbe wird beim Druckvorgang nahezu vollständig vom Bedruckstoff aufgenommen, so daß die Druckform vor dem nächsten Einfärbevorgang nahezu farbfrei ist.

Durch die Reduzierung der in bekannter Weise zu messenden Oberflächenspannung der Druckform auf ein geringes, vorteilhaft auf das unter Berücksichtigung aller Umstände im Einzelfall jeweils geringstmögliche Maß, wird ein praktisch vollständiges Ablösen der Farbe von der Druckform und Übertragen auf den Bedruckstoff, beispielsweise Papier oder dergleichen erreicht, insbesondere wenn die Kohäsion der Farbe hinreichend groß gewählt und auch das Farbannahmevermögen des Bedruckstoffes, d.h. die Haftkraft zwischen der Druckfarbe und dem Bedruckstoff, größer ist als die aus der Oberflächenspannung resultierende Haftkraft zwischen Druckfarbe und Druckform, wie das im allgemeinen sowieso der Fall ist. In vorteilhafter Weise wirkt sich das dahingehend aus, daß das Spektrum der verwendbaren Farbvarianten erheblich größer wird, daß der Farbverbrauch und die dafür aufzuwendenden Kosten sich verringern und daß insbesondere bei Mehrfarbendruck durch die geringeren Auftragsmengen die Qualität der Wiedergabe in erheblichem Maße verbessert wird. In gleichem Maße, wie durch den geringeren Farbfilm die gesamte Farbsteuerung unproblematischer wird, läßt sich bei Verwendung von Papier dessen Makulatur im konventionellen Hochdruck reduzieren. Schließlich wird durch den verringerten Anpreßdruck zwischen Druckform und Druckzylinder auch die maschinelle Beanspruchung der Rotationsmaschine erheblich gemindert.

In der Praxis gibt es verschiedene Prozesse, um die reliefbildende Schicht einer Druckform photochemisch zu erzeugen. Durch die Einwirkung von Strahlung wird entweder direkt eine les- und nutzbare Informationsaufzeichnung erhalten oder ein latentes Bild, das durch einen Entwicklungsschritt in eine nutzbare Aufzeichnung überführt wird.

Im wesentlichen gibt es drei Systeme, nämlich Strukturen, die bei Lichteinwirkung dimerisieren, polymerisieren oder depolymerisiert werden. Durch die beiden erstgenannten Verfahren werden Polymere erhalten, die durch die Lichteinwirkung unlöslich werden, während das unbelichtete Material mit Lösungsmitteln, wässrigen Lösungen oder Wasser herausgelöst werden kann. Bei der Depolymerisation bewirkt die Strahlung den Abbau von Polymermolekülen. Die durch Fragmentierung mit kurzwelligen UV-Licht oder durch ionisierende Strahlung erzeugten niedermolekularen Anteile sind besser löslich als das Ausgangspolymere und können mit geeigneten Lösungsmitteln herausgelöst werden.

Die größte praktische Bedeutung haben photopolymerisierbare Massen, die üblicherweise aus einem wasserlöslichen oder wasserdispergierbaren Polymeren mit ethylenisch ungesättigten photopolymerisierbaren oder photovernetzbaren Gruppen, einem Photoinitiator oder -sensibelisator und üblichen nicht photopolymerisierbaren Hilfs- oder Zusatzstoffen bestehen. (DE-A-33 22 994, EP-B-131 294). Unter dem Einfluß des aktinischen Lichts wird der Photoinitiator aktiviert, so daß er die Polymerisation oder Vernetzung induziert. Auf diese Weise werden in der belichteten Schicht polymerisierte und nichtpolymerisierte Bereiche in bildmäßiger Verteilung entsprechend den hellen und dunklen Stellen der zur Belichtung verwendeten Vorlage ausgebildet. Durch Behandlung mit einem geeigneten Lösungsmittel, das das unpolymerisierte oder unvernetzte Material in den unbelichteten Bereichen aber nicht das Polymere in den belichteten Bildbereichen auflöst, wird dann die reliefbildende Schicht erhalten.

Aus Gründen der Handhabung enthalten die im Handel befindlichen Druckplatten mit lichtempfindlicher Kunststoffschicht meist wasserlösliche oder wasserdispergierbare Polyvinylalkoholderivate, die sich zwar mit Wasser oder wässrigen Lösungen entwickeln lassen, bei denen aber die druckenden Elemente der reliefbildenden Schicht trotzdem noch zu leicht von wässrigen Medien angegriffen werden, so daß man solche Hochdruckplatten, insbesondere beim Zeitungshochdruck nur zum Drucken mit ölhaltigen Druckfarben aber nicht mit Emulsionsfarben verwendet. Da ein wasserlöslicher oder wasserdispergierbarer Kunststoff auch zwangsläufig hydrophiler und leichter benetzbar ist, bedarf er für die Zwecke der Erfindung eines höheren Anteils an dem öl- und wasserabweisenden Kunststoff mit der geforderten niedrigeren kritischen Oberflächenspannung oder einer entsprechend nachhaltigen Modifizierung zumindest an der Oberfläche der druckenden Elemente.

Für die Zwecke der Erfindung wird man deshalb schon solche Basispolymeren wählen, die bei der Photodi- oder Polymerisation durch die Druckfarbe weniger benetzbar werden oder die im Fall der Photodepolymerisation schon von Natur aus verhältnismäßig öl- und wasserabweisend sind und eine niedrige kritische Oberflächenspannung besitzen.

Durch die Einlagerung feiner Teilchen von Polymeren mit der geforderten geringen Oberflächenspannung, insbesondere von Fluorpolymeren, läßt sich wenigstens für die druckenden Stellen, unter Umständen auch für die ganzen druckenden Elemente, die geforderte niedrige Oberflächenspannung erzielen.

Beispielsweise dispergiert man in dem Polymeren wenigstens im Bereich der druckenden Stellen besonders feine Teilchen von PTFE mit einem Durchmesser von z.B. 10 bis 30 »m oder etwas mehr. Solche Pulver sind im Handel und können insbesondere bereits bei der Polymerisation in den photovernetzbaren oder photodepolymerisierbaren Kunststoff eingebaut werden.

Eine andere Möglichkeit, das photochemisch veränderbare Material so zu modifizieren, daß die nach dem Entwickeln zurückbleibenden druckenden Elemente oder zumindest die druckenden Stellen die erfindungsgemäß gewünschten Eigenschaften besitzen, besteht darin, diese Polymeren durch den Einbau von chemischen Gruppen zu modifizieren von denen bekannt ist, daß sie die kritische Oberflächenspannung von Kunststoffen erniedrigen. Hierzu gehören insbesondere Perfluoralkylgruppen. Statt den Kunststoff der reliefbildenden Schicht schon bei seiner Herstellung oder spätestens der Belichtung in dem gewünschten Sinne zu modifizieren, ist es auch möglich, die druckenden Stellen oder die Oberfläche der druckenden Elemente in der bereits erhaltenen reliefbildenden Schicht mit geeigneten chemischen Agenzien so nachzubehandeln, daß die kritische Oberflächenspannung und Benetzbarkeit in dem gewünschten Sinne vermindert wird.

Die mit der Erfindung verbundenen Vorteile konnten anhand einer Reihe von zum Teil unter großen Schwierigkeiten und behelfsmäßig durchgeführten Tests unter Beweis gestellt werden. So wurde beispielsweise ein Versuch mit einer bekanntermaßen eine extrem niedrige Oberflächenspannung aufweisenden Polytetrafluorethylen-Folie durchgeführt. Mittels Gravur wurde auf einer an sich für Filmschnitt eingerichteten und eine nur unzulängliche Befestigung der Folie ermöglichenden Anlage eine rastermäßige Strukturierung vorgenommen. Eine Rasterpunktbeurteilung war nicht möglich, da die einheitliche Färbung der Folie eine Beurteilung nicht zuließ. Um das Offenhalten im tiefen Bereich feststellen zu können wurde trotzdem ein Minimalschnitt vorgenommen.

Für den Druckversuch wurde die Folie mit einem zweiseitigen Klebeband auf einen Stahlträger aufgeklebt und die bisher verwendete Druckfarbe mit einer dreißigprozentigen Wassermenge manuell verschnitten, um ein schnelleres Wegschlagen der Farbe zu erreichen.

Ziel des Versuchs war die Bestätigung der vollen Sättigung bei negativen Flächen und die Erprobung, in welchem Umfang Rastertonwerte in den Tiefen offengehalten werden können. Trotz der unzulänglichen Mittel ergab sich eine volle Bestätigung der erwarteten Ergebnisse. So ergab sich unter anderem eine absolute Farbdeckung, eine praktisch völlige Unterbindung der Farbspaltung sowie eine Offenhaltung von Tiefenbereichen von 12 bis 15 ».

Darüberhinaus konnten folgende Feststellungen getroffen werden:
Die Farbmengensteuerung konnte erheblich verringert werden. Bei nahezu 1 3/4 Seiten Negativfläche mußte nur mit zu 70 % geöffneter Farbmengensteuerung und einfacher Farbduktorgeschwindigkeit gefahren werden; gegenüber doppelter Duktorgeschwindigkeit bei voller Öffnung der Farbmengensteuerung in herkömmlicher Weise. Weiterhin konnte der Anpreßdruck stark verringert werden und wurde durch Veränderung der Farbzusammensetzung beim Anlaufen der Maschine eine schnellere Farbdeckung erzielt.

Im weiteren wurde eine Farbvariante getestet, die fabrikmäßig angerieben wurde. Das Mischungsverhältnis wurde ebenfalls mit Zusatz von 30 % Wasser hergestellt. Ziel war es, die Farbsteuerung zu untersuchen und Farbdichtemessungen vorzunehmen.

Als Ergebnis konnten Werte von 1,01 bis 1,12 densitometrischer Dichte erzielt werden.

Bei einem weiteren Druckversuch wurde eine Kompaktfarbe eingesetzt, um das Anliegen der Farbe auf der Druckplatte zu testen. Bei der Druckplatte wurde der obere Niveaustreifen um 0,2 mm höher aufgebracht, um Auswirkungen auf das Farbabnahmeverhalten und den Druckausfall zu ermitteln.

Als Ergebnis zeigte sich, daß bei beiden Niveauhöhen nach dem Druckvorgang die gleichen Farbrückstandsmengen vorhanden waren und daß ein erhöhter Anpreßdruck keine Auswirkungen auf die Farbdichte hat. Es ergaben sich exakt die gleichen densitometrischen Dichten, woraus sich ergibt, daß eine höhere Druckspannung das Druckergebnis nicht beeinflußt.

Bei einem weiteren Test wurden zwei Farben, von denen die eine eine Buntfarbe von hoher Fließfähigkeit war, eingesetzt. Dieser Test diente ausschließlich der Farberprobung. Bezüglich der Farbgebung und der Farbabnahme bestätigten sich die Ergebnisse der vorangegangenen Druckversuche.

Zusammenfassend ist bezüglich der Untersuchungen festzustellen, daß der technischen Konzeption des Farbwerkes bei erfindungsgemäßem Vorgehen nur eine untergeordnete Bedeutung zukommt und auch Probleme des Einfärbevorgangs als neutralisiert angesehen werden können. So wurde beispielsweise optisch keine Veränderung beim Flächendruck wahrgenommen, als eine vorhandene dritte Auftragswalze völlig abgestellt wurde.

Beim Druckvorgang kommt es zu einer erheblichen Verringerung des Anpreßdruckes; die Farbspaltung wird praktisch unterbunden.

In vorteilhafterweise bleibt die Farbmengenförderung auf das erforderliche Farbdeckungsvolumen der Wiedergabeforderung auf dem Bedruckstoff beschränkt, wodurch eine Übersättigung auf der Druckplatte vermieden wird. Im Rasterbereich kommt es nicht zum Zusetzen der Tiefen und die Lichter werden randscharf wiedergegeben, weil die speziellen Eigenschaften der Platte die Farbe nur an den beim Einfärbevorgang mit der Oberfläche Auftragswalze in einer Ebene liegenden Flächenbereichen haften lassen.

Durch den Farbfilm geringer Dicke und den niedrigen Anpreßdruck beim Druckvorgang wird die Komprimierung der Farbe im gleichen prozentualen Maße vermindert, wie die Minderung des Farbauftragsvolumens und die Reduzierung des Anpreßdruckes erfolgen.

Die aufgetragene Farbe wird beim Druckvorgang nahezu vollständig vom Bedruckstoff aufgenommen und die Druckplatte ist vor dem nächsten Einfärbevorgang so gut wie farbfrei.

Mit der erfindungsgemäßen Ausbildung der Druckplatte ergibt sich eine Druckqualität im Zeitungshochdruck, die einer guten Offsetqualität entspricht. Dabei ist es nicht erforderlich, irgendwelche Maschinengegebenheiten zu verändern. So sind beispielsweise weder Auftragswalzenhöhenverstellungen noch Änderungen im Aufzugsbereich erforderlich.

Versuchsweise wurde mit Aufzügen gedruckt, die nahezu zwei Jahre Laufzeit mit Nyloprintplatten hinter sich gebracht haben, und mit Farbauftragswalzen, die sich bereits 6 Jahre in der Maschine befanden.

Bezüglich des Typs der Farben ist zu erwähnen, daß bei den Versuchen sowohl reine Mineralölfarben als auch Emulsionsfarben, d.h. wasserhaltige Farben eingesetzt wurden, da der Zusammenhalt und die Stabilität der Farbe geprüft werden sollte. Der zuletzt genannte Farbtyp wurde in verschiedenen Variationen hinsichtlich der Fließfähigkeit eingesetzt. Das Druckergebnis war im Ausdruck gleichermaßen gut. Als vorteilhaft erweist es sich jedoch, Emulsionsfarben von hoher Fließfähigkeit einzusetzen, weil sich dadruch eine schnellere Farbmengengebung, ein geringerer Farbfilm, eine Reduzierung des Verreibvorgangs und -volumens, eine schnellere Abgabe zum Einfärbprozeß, ein besseres Anliegen auf der Druckplatte sowie infolge der reduzierten Farbmenge ein einfacheres Abnehmen von der Druckplatte ergibt.

Das der Erfindung zugrundeliegende Prinzip der Verringerung des Farbannahmeverhaltens der Druckplatte durch Herabsetzen der Oberflächenspannung auf ein geringstmögliches Maß wird dadurch begünstigt, daß nur eine geringe Farbmenge aufzubringen ist und die gute Fließfähigkeit der Druckfarbe es ermöglicht, den Einfärbprozeß in einem zeitlich kurzen Zyklus durchzuführen und optimal zu vollziehen. Die geringe Farbannahmefreundlichkeit der Druckplatte hat zur Folge, daß die Farbe in einfacher Weise von der Druckplatte abgenommen werden kann und daraus folgt, daß selbst bei geringstem Anpreßdruck zwischen Bedruckstoff und eingefärbter Druckplatte die Farbe auf dem Bedruckstoff haftet und sich von der Oberfläche der Druckplatte löst.

## Patentansprüche

1. Druckform für das Hochdruckverfahren mit druckenden Stellen aus Kunststoff mit der Kombination folgender Merkmale:
a) der Kunststoff an den farbführenden, druckenden Stellen weist eine kritische Oberflächenspannung von etwa 18 bis 35 mN/m auf;
b) die druckenden Elemente der reliefbildenden Schicht sind durch einen photochemischen Prozess ausgebildet;
c) die druckenden Stellen oder Elemente enthalten ein Fluorpolymeres.

2. Druckform nach Anspruch 1, dadurch gekennzeichnet, daß die druckenden Elemente durch Photodimerisation oder Photopolymerisation ausgebildet sind.

3. Druckform nach Anspruch 1, dadurch gekennzeichnet, daß die druckenden Elemente durch Photodepolymerisation ausgebildet sind.

4. Druckform nach einem der Ansprüche 1 bis 3, dadurch gekennzeichnet, daß das Fluorpolymere Polytetrafluorethylen (PTFE) oder ein Tetrafluorethylencopolymers ist.

5. Druckform nach Anspruch 4, dadurch gekennzeichnet, daß das Tetrafluorethylencopolymere Hexafluorpropylen enthält.

6. Druckform nach einem der Ansprüche 1 bis 5, dadurch gekennzeichnet, daß die druckenden Stellen oder Elemente ein Ethylen- oder Propylenhomo- oder -copolymerisat enthalten.

7. Druckform nach einem der Ansprüche 1 bis 6, dadurch gekennzeichnet, daß die druckenden Stellen oder Elemente das Fluorpolymere oder Polyolefin in feiner Verteilung enthalten.

8. Druckform nach einem der Ansprüche 1 bis 7, dadurch gekennzeichnet, daß die photochemisch gebildeten druckenden Stellen oder Elemente durch chemische Gruppierungen modifiziert sind, die die kritische Oberflächenspannung der Polymeren einstellen.

9. Druckform nach Anspruch 8, dadurch gekennzeichnet, daß die chemischen Gruppierungen Perfluoralkylgruppen sind.

10. Druckform nach einem der Ansprüche 1 bis 9, dadurch gekennzeinet, daß die Kunststoffdeckschicht mit Wasser auswaschbar ist.

11. Druckform nach einem der Ansprüche 1 bis 10, dadurch gekennzeichnet, daß die kritische Oberflächenspannung und/oder Benetzbarkeit der druckenden Stellen oder der Oberfläche der druckenden Elemente durch eine chemische Nachbehandlung eingestellt ist.

## Claims

1. Printing form for the relief printing process having plastic impression sites with the combination of the following characteristics:
a) the critical surface tension of the plastic at the ink-bearing impression sites is approximately 18 to 35 mN/m;
b) the printing elements of the relief-constituting layer are created by a photochemical process;
c) the ink-bearing impression sites or elements comprise a fluoropolymer.

2. Printing form according to claim 1, wherein the printing elements are created by photodimerization or photopolymerisation.

3. Printing form according to claim 1, wherein the printing elements are created by photodepolymerisation.

4. Printing form according to one of claims 1 to 3, wherein the fluoropolymer is a polytetrafluoroethylene (PTFE) or a copolymer of tetrafluoroethylene.

5. Printing form according to claim 4, wherein the tetrafluoroethylene comprises hexafluoropropylene.

6. Printing form according to one of claims 1 to 5, wherein the impression sites or elements comprise a homopolymer or copolymer of ethylene or propylene.

7. Printing form according to one of claims 1 to 6, wherein the impression sites or elements contain the fluoropolymer or polyolefin in finely dispersed form.

8. Printing form according to one of claims 1 to 7, wherein the photochemically created impression sites or elements are modified by chemical groups adjusting the critical surface tension of the polymers.

9. Printing form according to claim 8, wherein the chemical groups are perfluoroalkyl groups.

10. Printing form according to one of claims 1 to 9, wherein the outer plastic layer can be washed out with water.

11. Printing form according to one of claims 1 to 10, wherein the critical surface tension and/or wettability of the impression sites or the surface of the printing elements is adjusted by a subsequent chemical treatment.

## Revendications

1. Plaque d'impression pour le procédé d'impression en relief comportant des lieux d'encrage en matière plastique avec la combinaison des caractéristiques suivantes:
a) la matière plastique aux lieux d'encrage et d'impression a une tension superficielle critique d'environ 18 à 35 mN/m;
b) les éléments d'impression de la couche constituant le relief sont formés par un procédé photochimique;
c) les lieux ou éléments d'impression comprennent un polymère fluoré.

2. Plaque d'impression selon la revendication 1, caractérisée en ce que les éléments d'impression sont formés par photodimérisation ou photopolymérisation.

3. Plaque d'impression selon la revendication 1, caractérisée en ce que les éléments d'impression sont formés par photodépolymerisation.

4. Plaque d'impression selon l'une des revendications 1 à 3, caractérisée en ce que le polymère fluoré est un polytétrafluoréthylène (PTFE) ou un copolymère de tétrafluoréthylène.

5. Plaque d'impression selon la revendication 4, caractérisée en ce que le copolymère de tétrafluoréthylène comprend du propylène hexafluoré.

6. Plaque d'impression selon l'une des revendications 1 à 5, caractérisée en ce que les lieux ou éléments d'impression comprennent un homopolymère ou copolymère d'ethylène ou de propylène.

7. Plaque d'impression selon l'une des revendications 1 à 6, caractérisée en ce que les lieux ou éléments d'impression contiennent le polymère fluoré ou le polyoléfine en distribution fine

8. Plaque d'impression selon l'une des revendications 1 à 7, caractérisée en ce que les lieux ou les éléments d'impression formés photochimiquement sont modifiés par des groupements chimiques ajustant la tension superficielle critique des polymères.

9. Plaque d'impression selon la revendication 8, caractérisée en ce que les groupements chimiques sont des groupes d'alkyle perfluorés.

10. Plaque d'impression selon l'une des revendications 1 à 9, caractérisée en ce que la couche extérieure en matière plastique peut être extraite par lavage avec de l'eau.

11. Plaque d'impression selon l'une des revendications 1 à 10, caractérisée en ce que la tension superficielle critique et/ou la mouillabilité des lieux d'impression ou de la surface des éléments d'impression est ajustée par retraitement chimique.
